# EUROPÄISCHE PATENTSCHRIFT

(11) **EP 0 984 219 B1**
(45) Veröffentlichungstag und Bekanntmachung des Hinweises auf die Patenterteilung: **28.12.2005**
(21) Anmeldenummer: 99115738.9
(22) Anmeldetag: 10.08.1999
(51) Int. Cl.: F16M 11/14

(54) **Stativkopf**
Support head
Tête de support

(30) Priorität: 29.08.1998 DE 19839461
(43) Veröffentlichungstag der Anmeldung: 08.03.2000
(73) Patentinhaber: FLM GmbH Foto-, Licht- und Messtechnisches Zubehör, 79312 Emmendingen (DE)
(72) Erfinder: Bürklin, Werner, 79312 Emmendingen-Wasser (DE)
(74) Vertreter: Patent- und Rechtsanwaltssozietät Maucher, Börjes & Kollegen

(56) Entgegenhaltungen:
- US-A- 1 798 446
- US-A- 2 180 214

## Beschreibung

Die Erfindung betrifft einen Stativkopf, mit einem Kugelgelenk, das eine in einem Lagergehäuse verschwenkbar und drehbar gelagerte Gelenkkugel aufweist, wobei das Kugelgelenk zwischen an einander abgewandten Enden des Stativkopfs befindlichen Anschlußstellen angeordnet ist, von denen die eine mit einer Kamera und die andere mit wenigstens einem Stativbein oder dergleichen Halterung verbunden oder verbindbar ist, wobei die Gelenkkugel zum Beschränken ihrer Verschwenkbarkeit auf eine Schwenkbewegung um eine durch den Kugelmittelpunkt der Gelenkkugel verlaufende Schwenkachse mit einem Achsteil lösbar verbindbar ist, welches Achsteil außerhalb der Gelenkkugel und benachbart zu dieser angeordnet und dort an dem Lagergehäuse um die Schwenkachse drehbar gelagert ist.

Aus der US 21 80 214 und aus einem Prospekt der Firma Emo-Optik, Wetzlar (1994) ist bereits ein Stativkopf bekannt, der ein Achsteil hat, das in Gebrauchsstellung mit einem Teilbereich in eine Bohrung der Gelenkkugel eingesetzt ist und mit einem anderen Teilbereich eine Öffnung des Lagergehäuses durchsetzt.

Zum Freigeben der Verschwenkbarkeit der Gelenkkugel in einer beliebigen Richtung ist das Achsteil aus der Gelenkkugel und dem Lagergehäuse herausnehmbar. In Gebrauchsstellung bildet das in die Bohrung der Gelenkkugel eingesetzte Achsteil ein Schwenklager, das die Verschwenkbarkeit und die Drehbarkeit der Gelenkkugel relativ zu dem Lagergehäuse derart festlegt, daß die Gelenkkugel nur noch um die Schwenkachse verschwenkbar und im übrigen blockiert ist. Dadurch ist es möglich, eine an dem Stativkopf befestigte Kamera in einer genau rechtwinklig zu der Schwenkachse verlaufenden Schwenkebene zu neigen, ohne daß die Gefahr besteht, daß die Kamera versehentlich um den Mittelpunkt der Gelenkkugel quer zur Schwenkebene verkippt oder um eine in der Schwenkebene durch den Mittelpunkt der Gelenkkugel verlaufende Achse verdreht wird.

Der vorbekannte Stativkopf hat den Nachteil, daß das aus der Bohrung der Gelenkkugel herausgenommene Achsteil leicht verlorengehen kann, so daß die Verschwenkbarkeit der Gelenkkugel dann nicht mehr festgelegt werden kann. Ein weiterer Nachteil besteht darin, daß das Einsetzen des Achsteils in die Gelenkkugel eine gewisse Geschicklichkeit erfordert, da die in dem Lagergehäuse befindliche Öffnung vor dem Einsetzen des Achsteils mit der Bohrung der Gelenkkugel exakt zur Deckung gebracht werden muß. Außerdem muß das Achsteil genau axial zu der Öffnung und der Bohrung positioniert werden, damit das Achsteil in die Gelenkkugel eingesetzt werden kann.

Aus der US 1 798 446 A ist ein Stativkopf mit einem Kugelgelenk bekannt, das eine in einem Lagergehäuse schwenkbar und drehbar gelagerte Gelenkkugel aufweist. Das Kugelgelenk ist zwischen an einander abgewandten Enden des Stativkopfs befindlichen Anschlußstellen angeordnet, von denen die eine mit einer Kamera und die andere mit wenigstens einem Stativbein oder dergleichen Halterung verbunden oder verbindbar ist. Der aus US 1 798 446 A vorbekannte Stativkopf ist zur Herstellung von Panoramabildern bestimmt, die durch horizontales oder vertikales Schwenken der Kamera aufgenommen werden. Um die am Stativkopf gehaltene Kamera vertikal verschwenken zu können, ist eine Stellschraube vorgesehen, die in radialer Richtung mit der Spitze ihres Schraubenschaftes in eine von mehreren, am Kugelumfang der Gelenkkugel gleichmäßig beabstandete Eingriffsöffnungen eingedreht und in Eingriff gebracht werden kann. Durch Eindrehen der Stellschraube in eine der Eingriffsöffnungen der Gelenkkugel kann die Verschwenkbarkeit des Kugelgelenks auf eine vertikale Verschwenkbarkeit begrenzt werden.

Das aus US 1 798 446 A vorbekannte Kugelgelenk lässt sich auf diese weise jedoch nur auf eine vertikale Schwenkbewegung begrenzen.

Es besteht daher Aufgabe, einen Stativkopf der eingangs erwähnten Art zu schaffen, dessen Verschwenkbarkeit auf eine beliebige, durch den Mittelpunkt der Gelenkkugel verlaufende Achse zu begrenzen ist. Dabei.soll auch die Gefahr eines Verlierens des Achsteils vermieden werden.

Die Lösung dieser Aufgabe bei einem gattungsgemäßen Stativkopf besteht darin, daß das Achsteil an seinem der Gelenkkugel zugewandten Ende wenigstens ein Reibelement zum reibschlüssigen Verbinden mit der Gelenkkugel aufweist, und dass eine Andrückeinrichtung vorgesehen ist, mit der das Reibelement an die Gelenkkugel andrückbar ist.

In vorteilhafter Weise ist also das Achsteil reibschlüssig mit der Gelenkkugel verbindbar, so daß das Achsteil zum Festlegen der Verschwenkbarkeit der Gelenkkugel nur an den Außenumfang der Gelenkkugel angedrückt und zum Lösen der Verschwenkbarkeit der Gelenkkugel von dieser abgezogen werden braucht. Dabei ist es sogar möglich, das Achsteil in unterschiedlichen Dreh- und/oder Schwenklagen der in dem Lagergehäuse gelagerten Gelenkkugel reibschlüssig mit dieser zu verbinden, wodurch die Verschwenkbarkeit der Gelenkkugel um unterschiedliche Schwenkachsen festgelegt werden kann. Das Achsteil kann sowohl in Feststellage, als auch in Losestellung jeweils mit dem Lagergehäuse verbunden sein, wodurch ein Verlieren des Achsteils vermieden wird.

Bei einer besonders vorteilhaften Ausführungsform der Erfindung weist das Reibelement eine der Krümmung der Gelenkkugel angepaßte konkave Reibfläche auf (Anspruch 2). Das Reibelement greift dann in Gebrauchsstellung flächig am Außenumfang der Gelenkkugel an, was die Übertragung entsprechend großer Reibkräfte und damit eine gute Beschränkung der Verschwenkbarkeit der Gelenkkugel auf eine Schwenkbewegung um eine durch den Kugelmittelpunkt der Gelenkkugel verlaufende Schwenkachse ermöglicht.

Bei einer vorteilhaften Ausführungsform ist vorgesehen, daß beidseits einer Mittelebene der Gelenkkugel in dem Lagergehäuse jeweils wenigstens ein Lagerring angeordnet ist, der jeweils wenigstens eine gegen eine Rückstellkraft am Außenumfang der Gelenkkugel anliegende Gleitfläche aufweist und daß das Reibelement des Achsteils an einem zwischen den Lagerringen befindlichen Außenumfangsbereich der Gelenkkugel angreift (Anspruch 3). Dabei können die Lagerringe mit einer definierten Andrückkraft an die Gelenkkugel angedrückt sein, so daß die Lagerringe beim Verschwenken oder Drehen der Gelenkkugel ein Reibmoment auf die Gelenkkugel ausüben, das bei einem Positionieren der Kamera mit ihrem Schwerpunkt seitlich von einer vertikal durch den Mittelpunkt der Gelenkkugel verlaufenden Gerade beabstandet ein durch das Gewicht der Kamera auf die Gelenkkugel einwirkendes Drehmoment ganz oder teilweise kompensiert. In vorteilhafter Weise ist das von den Lagerringen auf die Gelenkkugel übertragene Reibmoment weitgehend unabhängig von der Andruckkraft, mit der das Reibelement an die Gelenkkugel angedrückt wird. Beim Andrücken des in Losestellung befindlichen Reibelements an die Gelenkkugel wird nämlich jeweils ein auf derselben Seite der Gelenkkugel wie das Reibelement befindlicher Teilbereich der Lagerringe entlastet und gleichzeitig ein diesem Teilbereich gegenüberliegender, an der dem Reibelement abgewandten Seite der Gelenkkugel angeordneter Teilbereich der Lagerringe entsprechend stärker belastet.

Besonders vorteilhaft ist, wenn wenigstens einer der Lagerringe mit einer verstellbaren Andruckkraft beaufschlagbar ist und wenn dazu vorzugsweise ein Verstellmechanismus vorgesehen ist, der innerhalb seines Übertragungsweges wenigstens ein federelastisches Element sowie wenigstens ein mittels eines Handbetätigungselements bewegbares, eine Schrägfläche aufweisendes Beaufschlagungsstück hat (Anspruch 4). Das Reibmoment der Gelenkkugel kann dann an das jeweilige Gewicht der Kamera angepaßt werden, wobei dieses Reibmoment weitgehend unabhängig davon ist, ob das Reibelement reibschlüssig mit der Gelenkkugel verbunden oder von dieser gelöst ist.

Bei einer bevorzugten Ausführungsform der Erfindung ist vorgesehen, daß die Andrückeinrichtung für das Achsteil ein etwa radial zum Kugelmittelpunkt der Gelenkkugel bewegbares Verstellelement aufweist, und daß das Verstellelement über eine insbesondere eine Druckkugel aufweisende Drucklagerung an dem Achsteil abgestützt ist (Anspruch 5) Dadurch ergibt sich eine einfach aufgebaute Punktlagerung, die beim Verschwenken der Gelenkkugel in dem Lagergehäuse eine weitgehend reibungsfreie Übertragung der Andruckkraft von dem Verstellelement auf das relativ dazu um die Schwenkachse drehbare Achsteil ermöglicht.

Eine besonders einfach aufgebaute Andrückeinrichtung, mit der vergleichsweise große Andruckkräfte aufgebracht und auf das Reibelement übertragen werden können, kann dadurch erreicht werden, daß das Verstellelement der Andrückeinrichtung ein vorzugsweise konzentrisch zu der Schwenkachse der Gelenkkugel angeordnetes Schraubgewinde aufweist, das zum lösbaren Verbinden des Achsteils mit der Gelenkkugel mit einem Gegengewinde des Lagergehäuses verschraubbar ist (Anspruch 6).

Vorteilhaft ist, wenn das Verstellelement eine Innenhöhlung aufweist, in der das Achsteil um die Schwenkachse der Gelenkkugel drehbar gelagert ist (Anspruch 7). Das Achsteil ist dann bereichsweise im Inneren des Verstellelements angeordnet, was eine besonders kompakt aufgebaute Lagerung ermöglicht.

Eine bevorzugte und besonders vorteilhafte Ausführungsform sieht vor, daß das Reibelement aus Kautschuk und die Gelenkkugel aus Metall, insbesondere aus eloxiertem Aluminium besteht (Anspruch 8). Versuche haben ergeben, daß mit einem Reibelement aus Kautschuk eine besonders gute reibschlüssige Verbindung zwischen dem Achsteil und der Gelenkkugel möglich ist. Durch die Elastizität des Werkstoffs des Reibelements können beim Verschwenken der Gelenkkugel in dem Lagergehäuse Lageveränderungen der Gelenkkugel zu dem Reibelement ausgeglichen werden, so daß das Reibelement unabhängig von der jeweiligen Schwenklage der Gelenkkugel jeweils mit einer ausreichenden Andruckkraft an die Gelenkkugel angedrückt wird.

Bei einer besonders vorteilhaften Ausführungsform der Erfindung ist vorgesehen, daß das Lagergehäuse eine Öffnung aufweist, aus der die Gelenkkugel bereichsweise herausragt, daß an dem aus der Öffnung herausragenden Teilbereich der Gelenkkugel ein mit der Kamera verbindbares Schaftteil angeordnet ist, und daß der die Öffnung umgrenzende Randbereich des Lagergehäuses wenigstens eine Einformung aufweist, in die das Schaftteil zumindest bereichsweise verschwenkbar und vorzugsweise in eine Lage bringbar ist, in der die Verbindungslinie zwischen der Anschlußstelle für die Halterung und dem Mittelpunkt der Gelenkkugel einerseits und die Verbindungslinie zwischen der Anschlußstelle für die Kamera und dem Mittelpunkt der Gelenkkugel andererseits etwa rechtwinklig zueinander angeordnet sind (Anspruch 10). Dabei ist es sogar möglich, daß die in Umfangsrichtung des die Öffnung umgrenzenden Randbereichs orientierte Abmessung der Einformung an die Querschnittsabmessung des Schaftteiles angepaßt ist und daß bei in die Einformung verschwenktem Schaftteil die die Verbindungslinie zwischen der Anschlußstelle für die Kamera und dem Mittelpunkt der Gelenkkugel rechtwinklig zu der Schwenkachse des Achsteiles verläuft (Anspruch 11). Somit kann die Gelenkkugel durch Verschwenken des Schaftteiles in die Einformung in eine definierte Lage zu der Schwenkachse gebracht werden, in der entsprechend Anspruch 9 die Verbindungslinie zwischen der Anschlußstelle für die Kamera und dem Mittelpunkt der Gelenkkugel rechtwinklig zu der Schwenkachse des Achsteiles verläuft. In dieser Stellung kann das Achsteil reibschlüssig an die Gelenkkugel angedrückt werden, so daß sich die Kamera dann beim Verschwenken der Gelenkkugel um die Schwenkachse in einer Ebene bewegt, wobei eine Taumelbewegung der Kamera vermieden wird.

Vorteilhaft ist, wenn der Stativkopf ein vorzugsweise zwischen der Gelenkkugel und der Stativ-Anschlußstelle angeordnetes Drehgelenk aufweist, mit dem das die Stativ-Anschlußstelle aufweisende Stativkopf-Ende relativ zu dem die Kamera-Anschlußstelle aufweisenden Stativkopf-Ende verdrehbar ist und wenn die Drehachse des Drehgelenks rechtwinklig zu der Schwenkachse angeordnet ist und vorzugsweise durch den Kugelmittelpunkt der Gelenkkugel verläuft (Anspruch 12). Die Kamera kann dann beispielsweise zum Photografieren oder Filmen eines Panoramas in einer Horizontalebene um die Drehachse des Drehgelenks gedreht oder verschwenkt werden.

Zweckmäßigerweise weist entsprechend Anspruch 13 der Stativkopf zum Feststellen der Gelenkkugel eine Feststellvorrichtung auf, die ein mit der Gelenkkugel verklemmbares Klemmteil hat. Die Gelenkkugel kann dann in dem Lagergehäuse in allen Schwenk- bzw. Drehrichtungen arretiert werden.

Zweckmäßigerweise weist der Stativkopf entsprechend Anspruch 14 wenigstens ein Handbetätigungselement auf, das relativ zu dem Lagergehäuse entlang einer Verschiebeachse verschiebbar und gegebenenfalls um diese drehbar ist, wobei das Handbetätigungselement wenigstens einen an seinem Außenumfang vorstehenden abscherbaren Vorsprung aufweist, wobei das Handbetätigungselement mit einem den Vorsprung aufweisenden Teilbereich in die Innenhöhlung einer mit dem Lagergehäuse verbundenen, sich in Richtung der Verschiebeachse erstreckenden Haltehülse eingreift, wobei die Haltehülse wenigstens einen in ihre Innenhöhlung eingreifenden, vorzugsweise als Ringbund ausgebildeten Anschlag hat, gegen den der Vorsprung durch Verschieben des Handbetätigungselements entlang der Verschiebeachse positionierbar ist und daß der Anschlag an seiner bei in Gebrauchsstellung befindlichem Handbetätigungselement dem Vorsprung abgewandten Seite eine Einführschräge und an der dem Vorsprung zugewandten Seite eine Anschlagfläche aufweist, die unter einem steileren Winkel zu der Verschiebeachse angeordnet ist als die Einführschräge. Das Handbetätigungselement kann dann zum Betätigen einer Gerätefunktion des Stativkopfs in Verschieberichtung bewegt werden, wobei die Anschlagfläche des Anschlags den Verschiebeweg des Handbetätigungselements in Abziehrichtung begrenzt, so daß dieses nicht versehentlich aus der Haltehülse herausgezogen werden kann. Sollte das Handbetätigungselement einmal beschädigt werden, was beispielsweise bei einem unachtsamen Hantieren mit einem den Stativkopf aufweisenden Stativ passieren kann, kann das Handbetätigungselement durch Aufbringen einer relativ großen Zugkraft in Abziehrichtung angezogen werden. Dabei schert der Vorsprung des Handbetätigungselements an der Anschlagfläche des Anschlags ab. In die Haltehülse kann dann ein neues Handbetätigungselement eingesetzt werden, wobei dessen Vorsprung beim Einstecken des Handbetätigungselements in die Haltehülse an der in Einführrichtung abgeschrägten Einführschräge entlanggleitet ohne abgeschert zu werden. Der Vorsprung besteht vorzugsweise aus einem nachgiebigeren Material als das eigentliche Handbetätigungselement, beispielsweise aus Gummi.

Bei einem besonders kostengünstig herstellbaren Handbetätigungselement wird der Vorsprung des Handbetätigungselements durch einen in eine vorzugsweise als Ringnut ausgebildete Aufnahme des Handbetätigungselements eingesetzten O-Ring gebildet (Anspruch 15).

Nachfolgend ist ein Ausführungsbeispiel der Erfindung anhand der Zeichnung näher erläutert.

Die einzige Figur zeigt einen teilweise im Querschnitt dargestellten Stativkopf, wobei die Querschnittsebene durch den Mittelpunkt der Gelenkkugel und die Anschlußstellen für die Kamera und die Stativbeine verläuft.

Ein im ganzen mit 1 bezeichneter Stativkopf weist ein Kugelgelenk auf, das eine in einem Lagergehäuse 2 in eine beliebige Richtung verschwenkbar und drehbar gelagerte Gelenkkugel 3 hat. Das Kugelgelenk ist zwischen an einander abgewandten Enden des Stativkopfs 1 befindlichen Anschlußstellen 4, 5 angeordnet, von denen die Anschlußstelle 4 mit einer Kamera und die Anschlußstelle 5 mit einem Stativ oder einer entsprechenden Halterung verbindbar ist.

Zum Beschränken der Verschwenkbarkeit der Gelenkkugel 3 auf eine durch den Kugelmittelpunkt der Gelenkkugel 3 verlaufende, gedachte Schwenkachse 6, ist die Gelenkkugel 3 mit einem Achsteil 7 lösbar verbindbar. Das Achsteil 7 ist außerhalb der Gelenkkugel 3 und benachbart zu dieser angeordnet und an dem Lagergehäuse 2 um die Schwenkachse 6 drehbar gelagert. An seinem der Gelenkkugel 3 zugewandten Axialende weist das Achsteil 7 ein Reibelement 8 auf, mit dem es reibschlüssig mit der Gelenkkugel 3 verbindbar ist. Das Reibelement 8 ist dazu mit einer Andrückeinrichtung 9 an den Außenumfang der Gelenkkugel 3 andrückbar und von diesem zurückziehbar.

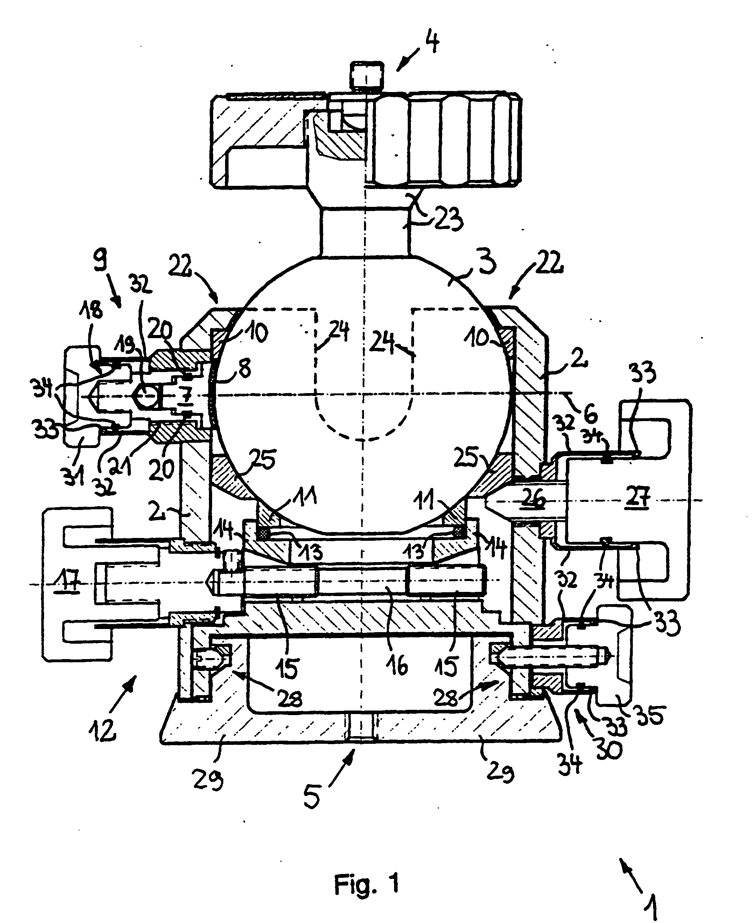

Wie aus der Querschnittsdarstellung in Fig.1 erkennbar ist, ist das Reibelement 8 als Reibplatte ausgebildet, die eine an die Krümmung der Gelenkkugel 3 bzw. deren Radius angepaßte konkave Reibfläche aufweist, die in Gebrauchsstellung flächig an der Gelenkkugel 3 anliegt. Das mittels der Andrückeinrichtung 9 an die Gelenkkugel 3 angedrückte Reibelement 8 weist dadurch eine gute reibschlüssige Verbindung zu der Gelenkkugel 3 auf. Das Reibelement 8 besteht vorzugsweise aus Kautschuk und ist teilweise in eine Aufnahmevertiefung des Achsteils 7 eingelassen.

Beidseits einer durch den Kugelmittelpunkt verlaufenden Horizontal-Mittelebene der Gelenkkugel 3 ist jeweils ein Lagerring 10, 11 in dem Lagergehäuse 2 angeordnet, der am Umfang der Gelenkkugel 3 anliegt. In Fig.1 ist erkennbar, daß die beiden Lagerringe 10, 11 etwa in parallel zueinander verlaufenden Ebenen angeordnet sind. Dabei verlaufen diese Ebenen etwa rechtwinklig zur Verbindungsachse zwischen der Anschlußstelle 5 für das Stativ und dem Mittelpunkt der Gelenkkugel 3. Die Lagerringe 10, 11 bestehen aus Kunststoff und weisen Gleitflächen auf, die am Umfang der Gelenkkugel 3 anliegen.

Dem Lagerring 11 ist ein Verstellmechanismus 12 zugeordnet, mit dem der Lagerring 11 mit einer einstellbaren Andruckkraft gegen die Gelenkkugel 3 andrückbar ist. Der Verstellmechanismus 12 weist innerhalb seines Übertragungsweges einen O-Ring 13 als elastisches Element auf, der an der der Gelenkkugel 3 abgewandten Rückseite des Lagerrings 11 anliegt und den Lagerring 11 schwimmend lagert.

Mit einer dem Lagerring 11 abgewandten, in Umfangsrichtung verlaufenden Dichtlinie liegt der O-Ring 13 an einem Druckring 14 an, der den O-Ring 13 und den Lagerring 11 mit einem Ringbund umgrenzt und zentriert.

Der Druckring 14 weist an seiner dem O-Ring 13 abgewandten Rückseite eine Schrägfläche auf, die auf einem konzentrisch zum Mittelpunkt der Gelenkkugel 3 angeordneten Kegelmantel verläuft. An diametral einander gegenüberliegenden Teilbereichen ist der Druckring 14 jeweils an einem Beaufschlagungsstück 15 abgestützt, die mit einer Schrägfläche flächig an dem Druckring 14 angreift. Die Beaufschlagungsstücke 15 sind als Spindelmuttern ausgebildet, die jeweils auf einem Gewindeabschnitt eines gemeinsamen Spannbolzens 16 angeordnet sind, der in dem Lagergehäuse 2 drehbar gelagert ist und mit einem Handbetätigungselement 17 in Antriebsverbindung steht. Die den Beaufschlagungsstücken 15 jeweils zugeordneten Gewindeabschnitte des Spannpolzens 16 weisen einen entgegengesetzt zueinander verlaufenden Drehsinn auf, so daß die Beaufschlagungsstücke 15 je nach Drehrichtung des Spannbolzens 16 entweder aufeinander zu oder voneinander weg bewegt werden. An ihrem dem Druckring 14 abgewandten Ende sind die Beaufschlagungsstücke 15 jeweils gegen das Lagergehäuse 2 abgestützt, so daß der Druckring 14 beim Aufeinanderzubewegen der Beaufschlagungsstücke 15 auf die Gelenkkugel 3 zubewegt und bei einer Bewegung der Beaufschlagungsstücke 15 in entgegengesetzter Richtung von der Gelenkkugel 3 wegbewegt werden. Dabei wird je nach Lage des Druckrings 14 relativ zu der Gelenkkugel 3 der O-Ring 13 mehr oder weniger stark komprimiert, was an dem O-Ring 13 eine entsprechende Reaktionskraft hervorruft, die über den Lagerring 11 auf die Gelenkkugel 3 übertragen wird. Die Andruckkraft des Lagerrings 11 und somit das von dem Lagerring 11 auf die Gelenkkugel 3 beim Verschwenken der Gelenkkugel 3 übertragene Reibmoment sind also mittels des Verstellmechanismus 12 einstellbar.

Wie aus Fig.1 erkennbar ist, greift das Reibelement 8 des Achsteils 7 an einem zwischen den Lagerringen 10 und 11 befindlichen Außenumfangsbereich der Gelenkkugel 3 an, wobei die Andruckkraft des Reibelements 8 im wesentlichen parallel zu den durch die Lagerringe 10, 11 aufgespannten Ebenen ausgerichtet ist. Die über das Reibelement 8 auf die Gelenkkugel 3 übertragene Andruckkraft bewirkt deshalb an dem an der dem Reibelement 8 abgewandten Seite der Gelenkkugel 3 angeordneten Teilbereich des Lagerrings 10 eine Erhöhung dessen Andruckkraft an die Gelenkkugel 3. Im Gegenzug dazu ergibt sich an der dem Reibelement 8 zugewandten Seite der Gelenkkugel 3 eine Entlastung des Lagerrings 10, da dort ein Teil der Stützkräfte von dem Reibelement 8 übernommen wird. Insgesamt ergibt sich dadurch eine gewisse Kompensation der an der Gelenkkugel 3 angreifenden Lager- und Haltekräfte, wodurch das mittels des Verstellmechanismus 12 einstellbare Reibmoment der Gelenkkugel 3 weitgehend unabhängig davon ist, ob das Reibelement 8 an die Gelenkkugel 3 angedrückt wird oder von dieser gelöst ist.

Die Andrückeinrichtung 9 für das Achsteil 7 weist ein etwa radial zum Kugelmittelpunkt der Gelenkkugel 3 bewegbares Verstellelement 18 auf. Das Verstellelement 18 ist mit einer eine Druckkugel 19 aufweisenden Drucklagerung an dem Achsteil 7 abgestützt. Die Druckkugel 19 ist in eine in Richtung der Gelenkkugel 3 offene Innenhöhlung des Verstellelements 18 eingesetzt, die sich ausgehend vom Mittelpunkt der Druckkugel 19 zu der tiefsten Stelle der Innenhöhlung verjüngt.

Das Achsteil 7 greift mit einem Teilbereich in die Innenhöhlung des Verstellelements 18 ein und ist dort mittels eines Gleitlagers um die Schwenkachse 6 drehbar gelagert. Mit einem in einer rechtwinklig zur Schwenkachse 6 angeordneten Ebene befindlichen Sicherungsring 20 ist das Achsteil 7 mit dem Verstellelement 18 in Axialrichtung formschlüssig verbunden. Dadurch kann das an die Gelenkkugel 3 angedrückte Achsteil durch entsprechendes Verstellen des Verstellelements 18 von der Gelenkkugel 3 abgezogen werden.

Das Verstellelement 18 weist ein konzentrisch zur Schwenkachse der Gelenkkugel angeordnetes, als Außengewinde ausgebildetes Schraubgewinde auf, das zum lösbaren Verbinden des Achsteils 7 mit der Gelenkkugel 3 mit einem Gegengewinde 21 des Lagergehäuses 2 verschraubbar ist. Das Verstellelement 18 trägt dazu an seinem dem Reibelement 8 abgewandten Ende ein Handbetätigungselement 31.

Das Lagergehäuse 2 weist an seinem der Anschlußstelle 5 für das Stativ abgewandten Ende eine Öffnung auf, aus der die Gelenkkugel 3 bereichsweise herausragt. Dabei hintergreift der die Öffnung umgrenzende Randbereich 22 die Gelenkugel 3. An dem aus der Öffnung herausragenden Teilbereich der Gelenkkugel 3 ist ein einstückig mit der Gelenkkugel 3 verbundenes Schaftteil 23 angeordnet, das sich etwa radial zum Mittelpunkt der Gelenkkugel 3 erstreckt und an seinem der Gelenkkugel 3 abgewandten Ende die Anschlußstelle 4 für die Kamera aufweist.

Der die Öffnung des Lagergehäuses 2 umgrenzende Randbereich 22 weist eine Einformung 24 auf in die das Schaftteil 23 verschwenkbar und in eine Lage bringbar ist, in der die Verbindungslinie zwischen der Anschlußstelle 5 für das Stativ oder die Halterung und dem Mittelpunkt der Gelenkkugel 3 einerseits und die Verbindungslinie zwischen der Anschlußstelle 4 für die Kamera und dem Mittelpunkt der Gelenkkugel 3 andererseits etwa rechtwinklig zueinander angeordnet sind. Die Einformung 24 weist etwa einen U-förmigen Querschnitt auf, wobei die Mittelachse der Einformung 24 im wesentlichen in einer rechtwinklig zur Schwenkachse 6 und durch den Kugelmittelpunkt der Gelenkkugel 3 verlaufenden Ebene angeordnet ist.

Die lichte Weite zwischen den U-Schenkeln der Einformung 24 entspricht dem Durchmesser des Schaftteils 23 oder ist etwas größer als dieser und die Einformung 24 ist so angeordnet, daß bei in die Einformung 24 verschwenktem Schaftteil 23 die Verbindungslinie zwischen der Anschlußstelle 4 für die Kamera und dem Mittelpunkt der Gelenkkugel 3 rechtwinklig zu der Schwenkachse 6 des Achsteiles 7 verläuft.

Die Neigerfunktion des Stativskopfs 1 kann in jeder Kugelposition durch Andrücken des Achsteils 7 an die Gelenkkugeln 3 akiviert werden, woraufhin die Gelenkkugel 3 nur noch um die Schwenkachse 7 bewegbar und in anderen Bewegungen gehemmt ist. Eine genaue Ausrichtung der Ebene, in der die Anschlußstelle 4 für die Kamera um den Mittelpunkt der Gelenkkugel 3 verschwenkbar ist, kann dadurch erreicht werden, daß das Schaftteil 23 zunächst in den durch die Einformung 24 gebildeten Gehäuseschlitz des Lagergehäuses 2 verschwenkt wird und danach das Reibelement 8 des Achsteils 7 mit der Andrückeinrichtung 9 an die Gelenkkugel 3 angedrückt wird, um die Neigerfunktion zu aktivieren.

Zum Feststellen der Gelenkkugel 3 in einer beliebigen Position hat der Stativkopf 1 eine Feststellvorrichtung mit einem Klemmring 25, der mit seinem inneren Umfang flächig an der Gelenkkugel 3 anliegt und mit seiner Erstreckungsebene etwa parallel zu den Erstreckungsebenen der Lagerringe 10, 11 angeordnet ist. An seinem der Gelenkkugel 3 abgewandten Außenumfang ist der Klemmring 25 gegen das Lagergehäuse 2 abgestützt. Am Außenumfang weist der Klemmring 25 eine Schräge auf, die mit dem konischen Endbereich eines mit einem Gewinde des Lagergehäuses 2 verschraubten Gewindebolzens 26 gegen die Gelenkkugel 3 verklemmbar ist. Zum Feststellen und Lösen des Klemmrings 25 von der Gelenkkugel 3 ist der Gewindebolzen 26 mit einem Handbetätigungselement 27 drehbar.

Der Stativkopf 1 hat ferner ein zwischen der Gelenkkugel 3 und der Anschlußstelle 5 für das Stativ angeordnetes Drehgelenk 28, mit dem das Lagergehäuse 2 der Gelenkkugel 3 um eine durch die Anschlußstelle 5 für das Stativ und den Mittelpunkt der Gelenkkugel 3 verlaufende Achse relativ zu einem die Stativ-Anschlußstelle 5 aufweisenden Bodenteil 29 verdrehbar ist.

Mit dem Drehgelenk 28 können beispielsweise mehrere seitlich nebeneinader angeordnete Teilbereiche des Panoramas nacheinander fotografiert werden. Mit einer Arretierung 30 ist das Drehgelenk 28 in einer beliebigen Drehposition lösbar festlegbar.

Die Handbetätigungselemente 27, 31, 35 sind jeweils relativ zu dem Lagergehäuse 2 durch eine Drehbewegung entlang einer ihnen jeweils zugeordneten Verschiebeachse verschiebbar. Dabei wird bei den Handbetätigungselementen 27, 35 jeweils ein Gewindebolzen 26, auf dem das Handbetätigungselemet 27, 35 fixiert ist, und bei dem Handbetätigungselement 31 das Verstellelement 18 in das Lagergehäuse 2 hinein oder aus diesem herausgeschraubt.

Die Handbetätigungselemente 27, 31, 35 weisen an ihrem Außenumfang jeweils einen radial vorstehenden abscherbaren Vorsprung auf, der durch einen O-Ring 34 gebildet ist, der teilweise in eine Ringnut des Handbetätigungselements 27, 31, 35 eingesetzt ist und in Umfangsrichtung um das Handbetätigungselement 27, 31, 35 umläuft.

Das Handbetätigungselement 27, 31, 35 greift jeweils mit einem den O-Ring 34 aufweisenden Teilbereich in die Innenhöhlung einer mit dem Lagergehäuse 2 verbundenen, sich in Richtung der jeweiligen Verschiebeachse erstreckenden Haltehülse 32 ein. Diese hat einen als Ringbund ausgebildeten Anschlag 33, der in die Innenhöhlung der Haltehülse 32 eingreift und deren lichte Weite bereichsweise reduziert. Durch Bewegen des in Gebrauchsstellung befindlichen Handbetätigungselements 27, 31, 35 entlang der diesem zugeordneten Verschiebeachse ist der Vorsprung des Handbetätigungselements 27, 31, 35 gegen eine Anschlagfläche des Anschlags 33 positionierbar. Dadurch wird ein versehentliches Abschrauben der Handbetätigungselemente 27, 31, 35 von dem Lagergehäuse 2 vermieden.

Durch eine Abschraubbewegung des Handbetätigungselements 27, 31, 35 über einen Druckpunkt hinweg kann ein über den Außenumfang des Handbetätigungselements 27, 31, 35 vorstehender Bereich des an der etwa rechtwinklig zur Verschiebeachse des Handbetätigungselements 27, 31, 35 angeordneten Anschlagfläche des Anschlags 33 anliegenden O-Rings 34 abgeschert bzw. abgetrennt werden, um das Handbetätigungselement 27, 31, 35 von dem Lagergehäuse zu trennen. Dies kann beispielsweise erforderlich werden, wenn das Handbetätigungselement 27, 31, 35 einmal beschädigt sein sollte und durch ein neues ersetzt werden muß.

Das neue Handbetätigungselement 27, 31, 35 wir anschließend in die Haltehülse 32 eingesetzt. An seiner bei in Gebrauchsstellung befindlichem Handbetätigungselement 27, 31, 35 dem O-Ring 34 abgewandten Seite weist der Anschlag 33 eine in Einführrichtung des Handbetätigungselements 27, 31, 35 abgeschrägte Einführschräge auf. Dadurch kann der O-Ring 34 beim Einsetzen des Handbetätigungselements 27, 31, 35 ohne zerstört zu werden, über den Anschlag 33 in die Innenhöhlung der Haltehülse 32 eingesetzt werden. Somit kann das Handbetätigungselement 27, 31, 35 auf einfache Weise ausgetauscht werden.

Insgesamt ergibt sich somit ein Stativkopf 1 mit einem Kugelgelenk, das eine in einem Lagergehäuse 2 verschwenkbar und drehbar gelagerte Gelenkkugel 3 hat. Das Kugelgelenk ist zwischen an einander abgewandten Enden des Stativskopf 1 befindlichen Anschlußstellen 4, 5 angeordnet, von denen die eine mit einer Kamera und die andere mit einem Stativ oder dergleichen Halterung verbunden oder verbindbar ist. Zum Beschränken der Verschwenkbarkeit der Gelenkkugel 3 um eine durch deren Kugelmittelpunkt verlaufende Schwenkachse 6 ist die Gelenkkugel 3 lösbar mit einem Achsteil 7 verbindbar. Das Achsteil 7 ist außerhalb der Gelenkkugel 3 und benachbart zu dieser angeordnet und an dem Lagergehäuse 2 um die Schwenkachse 6 drehbar gelagert. An seinem der Gelenkkugel 3 zugewandten Ende weist das Achsteil 7 wenigstens ein Reibelement 8 zum reibschlüssigen Verbinden des Achsteils 7 mit der Gelenkkugel 3 auf. Das Reibelement 8 ist mit einer Andrückeinrichtung 9 an die Gelenkkugel 3 andrückbar.

## Patentansprüche

1. Stativkopf (1), mit einem Kugelgelenk, das eine in einem Lagergehäuse (2) verschwenkbar und drehbar gelagerte Gelenkkugel (3) aufweist, wobei das Kugelgelenk zwischen an einander abgewandten Enden des Stativkopfs (1) befindlichen Anschlußstellen (4, 5) angeordnet ist, von denen die eine mit einer Kamera und die andere mit wenigstens einem Stativbein oder dergleichen Halterung verbunden oder verbindbar ist, wobei die Gelenkkugel (3) zum Beschränken ihrer Verschwenkbarkeit auf eine Schwenkbewegung um eine durch den Kugelmittelpunkt der Gelenkkugel (3) verlaufende Schwenkachse (6) mit einem Achsteil (7) lösbar verbindbar ist, welches Achsteil (7) außerhalb der Gelenkkugel (3) und benachbart zu dieser angeordnet und dort an dem Lagergehäuse (2) um die Schwenkachse (6) drehbar gelagert ist, **dadurch gekennzeichnet, daß** das Achsteil (7) an seinem der Gelenkkugel (3) zugewandten Ende wenigstens ein Reibelement (8) zum reibschlüssigen Verbinden mit der Gelenkkugel (3) aufweist, und daß eine Andrückeinrichtung (9) vorgesehen ist, mit der das Reibelement (8) an die Gelenkkugel (3) andrückbar ist.

2. Stativkopf nach Anspruch 1, **dadurch gekennzeichnet, daß** das Reibelement (8) eine der Krümmung der Gelenkkugel (3) angepaßte konkave Reibfläche aufweist.

3. Stativkopf nach Anspruch 1 oder 2, **dadurch gekennzeichnet, daß** beidseits einer Mittelebene der Gelenkkugel (3) in dem Lagergehäuse (2) jeweils wenigstens ein Lagerring (10, 11) angeordnet ist, der jeweils wenigstens eine gegen eine Rückstellkraft am Außenumfang der Gelenkkugel (3) anliegende Gleitfläche aufweist und daß das Reibelement (8) des Achsteils (7) an einem zwischen den Lagerringen (10, 11) befindlichen Außenumfangsbereich der Gelenkkugel (3) angreift.

4. Stativkopf nach Anspruch 3, **dadurch gekennzeichnet, daß** wenigstens einer der Lagerringe (10, 11) mit einer verstellbaren Andruckkraft beaufschlagbar ist und daß dazu vorzugsweise ein Verstellmechanismus (12) vorgesehen ist, der innerhalb seines übertragungsweges wenigstens ein federelastisches Element sowie wenigstens ein mittels eines Handbetätigungselements (17) bewegbares, eine Schrägfläche aufweisendes Beaufschlagungsstück (15) hat.

5. Stativkopf nach einem der Ansprüche 1 bis 4, **dadurch gekennzeichnet, daß** die Andrückeinrichtung (9) für das Achsteil (7) ein etwa radial zum Kugclmittelpunkt der Gelenkkugel (3) bewegbares Verstellelement (18) aufweist, und daß das Verstellelement (18) über eine insbesondere eine Druckkugel (19) aufweisende Drucklagerung an dem Achsteil (7) abgestützt ist.

6. Stativkopf nach Anspruch 5, **dadurch gekennzeichnet, daß** das verstellelement (18) der Andrückeinrichtung (9) ein vorzugsweise konzentrisch zu der Schwenkachse (6) der Gelenkkugel (3) angeordnetes Schraubgewinde aufweist, das zum lösbaren Verbinden des Achsteils (7) mit der Gelenkkugel (3) mit einem Gegengewinde (21) des Lagergehäuses (2) verschraubbar ist.

7. Stativkopf nach Anspruch 5 oder 6, **dadurch gekennzeichnet, daß** das verstellelement (18) eine Innenhöhlung aufweist, in der das Achsteil (7) um die Schwenkachse (6) der Gelenkkugel (3) drehbar gelagert ist.

8. Stativkopf nach einem der Ansprüche 1 bis 7, **dadurch gekennzeichnet, daß** das Reibelement (8) aus Kautschuk und die Gelenkkugel (3) aus Metall, insbesondere aus eloxiertem Aluminium besteht.

9. Stativkopf nach einem der Ansprüche 1 bis 8, **dadurch gekennzeichnet, daß** die Schwenkachse (6) rechtwinklig zur Verbindungslinie zwischen der Anschlußstelle (5) für das Stativ und dem Mittelpunkt der Gelenkkugel (3) angeordnet ist.

10. Stativkopf nach einem der Ansprüche 1 bis 9, **dadurch gekennzeichnet, daß** das Lagergehäuse (2) eine Öffnung aufweist, aus der die Gelenkkugel (3) bereichsweise herausragt, daß an dem aus der Öffnung herausragenden Teilbereich der Gelenkkugel (3) ein mit der Kamera verbindbares Schaftteil (23) angeordnet ist, und daß der die Öffnung umgrenzende Randbereich (22) des Lagergehäuses (2) wenigstens eine Einformung (24) aufweist, in die das Schaftteil (23) zumindest bereichsweise verschwenkbar und vorzugsweise in eine Lage bringbar ist, in der die Verbindungslinie zwischen der Anschlußstelle (5) für die Halterung und dem Mittelpunkt der Gelenkkugel (3) einerseits und die Verbindungslinie zwischen der Anschlußstelle (4) für die Kamera und dem Mittelpunkt der Gelenkkugel (3) andererseits etwa rechtwinklig zueinander angeordnet sind.

11. Stativkopf nach Anspruch 10, **dadurch gekennzeichnet, daß** die in Umfangsrichtung des die Öffnung umgrenzenden Randbereichs (22) orientierte Abmessung der Einformung (24) an die Querschnittsabmessung des Schaftteiles (23) angepaßt ist und daß bei in die Einformung (24) verschwenktem Schaftteil (23) die Verbindungslinie zwischen der Anschlußstelle (4) für die Kamera und dem Mittelpunkt der Gelenkkugel (3) rechtwinklig zu der Schwenkachse (6) des Achsteiles (7) verläuft.

12. Stativkopf nach einem der Ansprüche 1 bis 11, **dadurch gekennzeichnet, daß** er ein vorzugsweise zwischen der Gelenkkugel (3) und der Stativ-Anschlußstelle (5) angeordnetes Drehgelenk (28) aufweist, mit dem das die Stativ-Anschlußstelle (5) aufweisende Stativkopf-Ende relativ zu dem die Kamera-Anschlußstelle (4) aufweisenden Stativkopf-Ende verdrehbar ist und daß die Drehachse des Drehgelenks (28) rechtwinklig zu der Schwenkachse (6) angeordnet ist und vorzugsweise durch den Kugelmittelpunkt der Gelenkkugel (3) verläuft.

13. Stativkopf nach einem der Ansprüche 1 bis 12, **dadurch gekennzeichnet, daß** er zum Feststellen der Gelenkkugel (3) eine Feststellvorrichtung aufweist, die ein mit der Gelenkkugel verklemmbares Klemmteil, insbesondere einen Klemmring (25) hat.

14. Stativkopf nach einem der Ansprüche 4 bis 13, **dadurch gekennzeichnet, daß** das Handbetätigungselement (17) und/oder wenigstens ein weiteres Handbetätigungselement (27, 31, 35) relativ zu dem Lagergehäuse (2) entlang einer Verschiebeachse verschiebbar und gegebenenfalls um diese drehbar ist, daß das Handbetätigungselement (17, 27, 31, 35) wenigstens einen an seinem Außenumfang vorstehenden abscherbaren Vorsprung aufweist, daß das Handbetätigungselement (17, 27, 31, 35) mit einem den Vorsprung aufweisenden Teilbereich in die Innenhöhlung einer mit dem Lagergehäuse (2) verbundenen, sich in Richtung der Verschiebeachse erstreckenden Haltehülse (32) eingreift, daß die Haltchülse (32) wenigstens einen in ihre Innenhöhlung eingreifenden, vorzugsweise als Ringbund ausgebildeten Anschlag (33) hat, gegen den der vorsprung durch Verschieben des Handbetätigungselements (17, 27, 31, 35) entlang der Verschiebeachse positionierbar ist und daß der Anschlag (33) an seiner bei in Gebrauchsstellung befindlichem Handbetätigungselement (17, 27, 31, 35) dem Vorsprung abgewandten Seite eine Einführschräge und an der dem Vorsprung zugewandten Seite eine Anschlagfläche aufweist, die unter einem steileren Winkel zu der Verschiebeachse angeordnet ist als die Einführschräge.

15. Stativkopf nach Anspruch 14, **dadurch gekennzeichnet, daß** der Vorsprung des Handbetätigungselements (17, 27, 31, 35) durch einen in eine vorzugsweise als Ringnut ausgebildete Aufnahme des Handbetätigungselement (17, 27, 31, 35) eingesetzten O-Ring (34) gebildet ist.

## Claims

1. A tripod head (1) comprising a ball joint which has a pivot ball (3) mounted pivotally and rotatably in a bearing housing (2), wherein the ball joint is arranged between connection points (4, 5) located at ends of the tripod head (1) facing away from each other, of which one is connected or can be connected to a camera and the other is connected or can be connected to at least one tripod leg or similar holder, wherein the pivot ball (3) is detachably connected to an axial portion (7) to restrict is pivotability to a pivoting movement about a pivot axis (6) running through the centre point of the pivot ball (3), which axial portion (7) is arranged outside the pivot ball (3) and adjacent thereto and is mounted so that it can rotate about the pivot axis (6) on the bearing housing (2), **characterised in that** the axial portion (7) has at its end facing the pivot ball (3) at least one friction element (8) for friction-contact connection to the pivot ball (3) and that a pressing device (9) is provided with which the friction element (8) can be pressed onto the pivot ball (3).

2. The tripod head according to claim 1, **characterised in that** the friction element (8) has a concave friction surface matched to the curvature of the pivot ball (3).

3. The tripod head according to claim 1 or 2, **characterised in that** disposed on both sides of a central plane of the pivot ball (3) in the bearing housing (2) is respectively at least bearing ring (10, 11) which has respectively at least one sliding surface abutting against a restoring force on the external circumference of the pivot ball (3) and that the friction element (8) of the axial portion (7) acts on an area of the external circumference of the pivot ball (3) located between the bearing rings (10, 11).

4. The tripod head according to claim 3, **characterised in that** at least one of the bearing rings (10, 11) can be exposed to an adjustable pressing force and that there is preferably provided for this purpose an adjusting mechanism (12) which has within its transmission path at least one spring-elastic element and at least one actuating member (19) having an oblique surface and movable by means of a manual actuating element (17).

5. The tripod head according to any one of claims 1 to 4, **characterised in that** the pressing device (9) for the axial portion (7) has an adjusting element (18) which can be moved approximately radially towards to the centre point of the pivot ball (3) and that the adjusting element (18) is supported by means of a thrust bearing arrangement on the axial portion (7) which especially comprises a thrust ball (19).

6. The tripod head according to claim 5, **characterised in that** the adjusting element (18) of the pressing device (9) has a screw thread preferably arranged concentrically to the pivot axis (6) of the pivot ball (3), which can be screwed to a counterthread (21) of the bearing housing (2) for detachable connection of the axial portion (7) to the pivot ball (3).

7. The tripod head according to claim 5 or 6, **characterised in that** the adjusting element (18) has an inner cavity wherein the axial portion (7) is rotatably mounted about the pivot axis (6) of the pivot ball (3).

8. The tripod head according to any one of claims 1 to 7, **characterised in that** the friction element (8) consists of rubber and the pivot ball (3) of metal, especially of anodised aluminium.

9. The tripod head according to any one of claims 1 to 8, **characterised in that** the pivot axis (6) is arranged at right angles to the connecting line between the connecting point (5) for the tripod and the centre point of the pivot ball (3).

10. The tripod head according to any one of claims 1 to 9, **characterised in that** the bearing housing (2) has an opening from which the pivot ball (3) projects in some areas, a shank portion (23) which can be connected to a camera is disposed on the partial area of the pivot ball (3) projecting from the opening and that the edge zone (22) of the bearing housing (2) bordering the opening has at least one moulded-in recess (24) into which the shank portion (23) can be pivoted at least in certain areas and preferably can be brought into a position in which the connecting line between the connecting point (5) for the holder and the centre point of the pivot ball (3) on the one hand and the connecting line between the connecting point (4) for the camera and the centre point of the pivot ball (3) on the other hand are disposed approximately at right angles to one another.

11. The tripod head according to claim 10, **characterised in that** the dimension of the moulded-in recess (24) oriented in the circumferential direction of the edge zone (22) bordering the opening is matched to the cross-sectional dimension of the shank portion (23) and that when the shank portion (23) is pivoted into the moulded-in recess (24), the connecting line between the connecting point (4) for the camera and the centre point of the pivot ball (3) runs at right angles to the pivot axis (6) of the axial portion (7).

12. The tripod head according to any one of claims 1 to 11, **characterised in that** it preferably has a swivel joint (28) disposed between the pivot ball (3) and the tripod connecting point (5) by which means the end of the tripod head having the tripod connecting point (5) can be turned relative to the end of the tripod head having the camera connecting point (4) and that the axis of rotation of the swivel joint (28) is disposed at right angles to the pivot axis (6) and preferably runs through the centre point of the pivot ball (3).

13. The tripod head according to any one of claims 1 to 12, **characterised in that** it has a locking device for locking the pivot ball (3) which has a clamping portion which can be clamped to the pivot ball, especially a clamping ring (25).

14. The tripod head according to any one of claims 4 to 13, **characterised in that** the manual actuating element (17) and/or at least one further manual actuating element (27, 31, 35) is displaceable along an axis of displacement relative to the bearing housing (2) and is optionally rotatable thereabout, that the manual actuating element (17, 27, 31, 35) has at least one projection capable of being sheared off, which projects on its outer circumference, that the manual actuating element (17, 27, 31, 35) engages with a partial area comprising the projection into the inner cavity of a retaining sleeve (32) connected to the bearing housing (2) and extending in the direction of the axis of displacement, that the retaining sleeve (32) has at least one stop (33) which engages in its inner cavity, preferably constructed as a ring collar, against which the projection can be positioned by displacement of the manual actuating element (17, 27, 31, 35) along the axis of displacement and that the stop (33) has a run-in slope on its side facing away from the projection when the manual actuating element (17, 27, 31, 35) is in the position for use and has a stop face on the side facing the projection which is disposed at a steeper angle to the axis of displacement compared with the run-in slope.

15. The tripod head according to claim 14, **characterised in that** the projection of the manual actuating element (17, 27, 31, 35) is formed by an O-ring (34) inserted in a receiver of the manual actuating element (17, 27, 31, 35) preferably constructed as an annular groove.

## Revendications

1. Tête de trépied (1) avec une rotule comportant une sphère articulée (3) logée de façon pivotante et rotative dans un logement de palier (2), la rotule étant disposée entre des zones de raccordement (4, 5) situées sur des extrémités opposées entre elles de la tête de trépied (1), dont l'une est reliée ou reliable avec une caméra et l'autre avec au moins un pied de trépied ou une fixation similaire, pour limiter sa capacité de pivotement dans un mouvement pivotant autour d'un axe de pivotement (6) traversant le point central de la sphère articulée (3), la sphère articulée (3) étant reliable de façon amovible avec un élément d'axe (7), lequel élément d'axe (7) est disposé à l'extérieur de la sphère articulée (3) et dans la voisinage de celle-ci et étant logée à cet endroit sur le logement de palier (2) de façon rotative autour de l'axe de pivotement (6), **caractérisée en ce que** sur son extrémité dirigée vers la sphère articulée (3), l'élément d'axe (7) comporte au moins un élément de friction (8) pour la liaison par friction avec la sphère articulée (3) et **en ce qu'**on a prévu un système de pression (9), permettant de presser l'élément de friction (8) sur la sphère articulée (3).

2. Tête de trépied selon la revendication 1, **caractérisée en ce que** l'élément de friction (3) comporte une surface de friction concave adaptée à la courbure de la sphère articulée (3).

3. Tête de trépied selon la revendication 1 ou 2, **caractérisée en ce que** de part et d'autre d'un plan médian de la sphère articulée (3), au moins une bague de palier (10, 11) présentant respectivement au moins une surface de glissement s'appliquant contre une force de rappel sur la périphérie de la sphère articulée (3) est disposée dans le logement de palier (2) et **en ce que** l'élément de friction (8) de l'élément d'axe (7) s'accroche sur une zone de périphérie de la sphère articulée (3) située entre les bagues de palier (10, 11).

4. Tête de trépied selon la revendication 3, **caractérisée en ce qu'**au moins l'une des bagues de palier (10, 11) peut être soumise à une force de pression réglable et **en ce qu'**on a prévu à cet effet de préférence un mécanisme de réglage (12), qui sur sa course de transmission est muni d'au moins un élément élastique à ressort et d'au moins une pièce d'application (19) mobile au moyen d'un élément d'actionnement manuel (17) et comportant une surface inclinée.

5. Tête de trépied selon l'une quelconque des revendications 1 à 4, **caractérisée en ce que** le dispositif de pression (9) pour l'élément d'axe (7) comporte un élément de réglage (18) mobile de façon approximativement radiale par rapport au point médian de la sphère articulée (3) et **en ce que** l'élément de réglage (18) est soutenu par l'intermédiaire d'un palier de butée comportant notamment une bille de butée (19) sur l'élément d'axe (7).

6. Tête de trépied selon la revendication 5, **caractérisée en ce que** l'élément de réglage (18) du système de pression (9) comporte un filetage disposé de façon de préférence concentrique par rapport à l'axe de pivotement (6) de la sphère articulée (3), qui pour la liaison amovible de l'élément d'axe (7) avec la sphère articulée (3) peut être vissé sur un contre-filetage (21) du logement de palier (2).

7. Tête de trépied selon la revendication 5 ou 6, **caractérisée en ce que** l'élément de réglage (18) comporte une concavité dans laquelle l'élément d'axe (7) est logé de façon rotative autour de l'axe de pivotement (6) de la sphère articulée (3).

8. Tête de trépied selon l'une quelconque des revendications 1 à 7, **caractérisée en ce que** l'élément de friction (8) est en caoutchouc et la sphère articulée (3) est en métal, notamment en aluminium éloxé.

9. Tête de trépied selon l'une quelconque des revendications 1 à 8, **caractérisée en ce que** l'axe de pivotement (6) est à angle droit par rapport à la ligne de liaison entre la zone de raccordement (5) du trépied et le point médian de la sphère articulée (3).

10. Tête de trépied selon l'une quelconque des revendications 1 à 9, **caractérisée en ce que** le logement de palier (2) comporte un orifice hors duquel la sphère articulée (3) saillit par zones, **en ce que** sur la zone partielle de la sphère articulée (3) saillant hors de l'orifice est disposé un élément de tige (23) reliable à la caméra et **en ce que** la zone de bordure (22) du logement de palier (2) entourant l'orifice comporte au moins un moulage creux (24) dans lequel l'élément de tige (23) peut être pivoté au moins par zones et amené de préférence dans une position dans laquelle la ligne de liaison entre la zone de raccordement (5) pour la fixation et le point médian de la sphère articulée (3) d'une part et la ligne de liaison entre la zone de raccordement (4) pour la caméra et le point médian de la sphère articulée (3) d'autre part sont disposées au moins approximativement à angle droit.

11. Tête de trépied selon la revendication 10, **caractérisée en ce que** la dimension du moulage creux (24) orientée dans le sens périphérique de la zone de bordure (22) entourant l'orifice est adaptée à la dimension de la section transversale de l'élément de tige (23) et **en ce que** lorsque l'élément de tige (23) est pivoté dans le moulage creux (24), la ligne de liaison entre la zone de raccordement (4) pour la caméra et le point médian de la sphère articulée (3) est à angle droit de l'axe de pivotement (6) de l'élément d'axe (7).

12. Tête de trépied selon l'une quelconque des revendications 1 à 11, **caractérisée en ce qu'**elle comporte une articulation rotative (28) disposée de préférence entre la sphère articulée (3) et la zone de raccordement du trépied (5) permettant de faire tourner l'extrémité de la tête de trépied comportant la zone de raccordement du trépied (5) par rapport à l'extrémité de la tête de trépied comportant la zone de raccordement de la caméra (4) et **en ce que** l'axe de rotation de l'articulation rotative (28) est disposé à angle droit de l'axe de pivotement (6) et traverse de préférence le point médian de la sphère articulée (3).

13. Tête de trépied selon l'une quelconque des revendications 1 à 12, **caractérisée en ce que** pour l'immobilisation de la sphère articulée (3), elle comporte un dispositif d'immobilisation qui est muni d'un élément de serrage pouvant être calé sur la sphère articulée, notamment une bague de serrage (25).

14. Tête de trépied selon l'une quelconque des revendications 4 à 13, **caractérisée en ce que** l'élément d'actionnement manuel (17) et/ou au moins un élément d'actionnement manuel supplémentaire (27, 31, 35) sont mobiles en translation par rapport au logement de palier (2), le long d'un axe de translation et le cas échéant rotatifs autour de ce dernier, **en ce que** l'élément d'actionnement manuel (17, 27 31, 35) comporte au moins une saillie détachable dépassant de sa périphérie extérieure, **en ce que** l'élément d'actionnement manuel (17, 27, 31, 35) s'engage par une zone partielle comportant la saillie dans la concavité d'une douille de maintien (32) reliée au logement de palier (2) et s'étendant en direction de l'axe de translation, **en ce que** la douille de maintien (32) est munie d'une butée (33) conçue de préférence sous la forme d'une nervure annulaire s'engageant dans sa concavité, contre laquelle la saillie est positionnable par translation de l'élément d'actionnement manuel (17, 27, 31, 35) le long de l'axe de translation et **en ce que** sur son côté opposé à la saillie lorsque l'élément d'actionnement manuel (17, 27, 31, 35) est en position de service, la butée (33) comporte une inclinaison d'introduction, alors que sur son côté tourné vers la saillie, elle comporte une surface de butée qui est disposée sous un angle plus obtus que l'inclinaison d'introduction par rapport à l'axe de translation.

15. Tête de trépied selon la revendication 14, **caractérisée en ce que** la saillie de l'élément d'actionnement manuel (17, 27, 31, 35) est formée par un joint torique (34) inséré dans un logement conçu de préférence sous la forme d'une rainure annulaire de l'élément d'actionnement manuel (17, 27, 31, 35).
